# EUROPÄISCHE PATENTSCHRIFT

(11) **EP 0 496 021 B1**
(45) Veröffentlichungstag und Bekanntmachung des Hinweises auf die Patenterteilung: **30.11.1994**
(21) Anmeldenummer: 91100940.5
(22) Anmeldetag: 25.01.1991
(51) Int. Cl.: F01D 21/20, F16K 37/00

(54) **Zuschaltventil und hydraulisches Sicherheits- und Kraftölsystem, in welchem das Zuschaltventil verwendet wird**
Stopvalve for hydraulic power and safety system
Soupape d'arrêt pour système hydraulique de sécurité

(43) Veröffentlichungstag der Anmeldung: 29.07.1992
(73) Patentinhaber: ASEA BROWN BOVERI AG, 5400 Baden (CH)
(72) Erfinder: Frey, Heinz, CH-5737 Menziken (CH)

(56) Entgegenhaltungen:
- EP-A- 0 376 914
- DE-A- 3 432 890
- FR-A- 2 090 187
- US-A- 2 658 484

## Beschreibung

### Technisches Gebiet

Die Erfindung geht aus von einem Zuschaltventil gemäss den Oberbegriff des Anspruchs 1 und von einem hydraulischen Sicherheits- und Kraftölsystem gemäss dem Oberbegriff des Anspruchs 5.

### Stand der Technik

Es ist ein Zuschaltventil bekannt mit mindestens einem Ventilsitz, der über eine Kolben-Zylinder-Anordnung betätigt wird. Die Kolben-Zylinder-Anordnung weist ein einerseits durch den Kolben begrenztes Antriebsvolumen auf. Der Kolben wird durch einen sich im Antriebsvolumen aufbauenden Druck beaufschlagt, wobei diesem Druckaufbau entgegenwirkende Kräfte ebenfalls auf den Kolben einwirken. Diese Kräfte können ebenfalls hydraulisch aufgebrachte Druckkräfte sein oder z.B. auch Federkräfte.

Ein derartiges Zuschaltventil kann bei einer Funktionskontrolle betätigt und auf Gängigkeit geprüft werden, jede derartige Betätigung hat jedoch unerwünschte direkte Auswirkungen auf den durch das Ventil kontrollierten Druckfluidstrom. Als Druckfluid wird häufig Oel verwendet.

Ferner sind hydraulische Sicherheits- und Kraftölsysteme im Bereich der Dampfzuführung einer Turbine bekannt, welche über ein Leitungssystem auf Ventile bzw. deren Antriebe, beispielsweise Schnellschluss- und Stellantriebe, einwirken und die Dampfzuführung beeinflussen. In derartigen Systemen werden Zuschaltventile eingesetzt, welche im Normalbetrieb die Zuströmung des Druckfluids, häufig Oel, in das Leitungssystem freigeben. Siehe z.B. das Dokument DE-A-3432890.

Derartige hydraulischen Sicherheits- und Kraftölsysteme ind häufig über längere Zeit im Betrieb, sodass die Zugehörigen Zuschaltventile nicht zugänglich sind für Funktionskontrollen. In gewissen Zeitintervallen muss deshalb die gesamte Anlage für Kontrollzwecke abgeschaltet werden, was deren Verfügbarkeit einschränkt.

### Darstellung der Erfindung

Hier will die Erfindung Abhilfe schaffen. Die Erfindung, wie sie in den unabhängigen Ansprüchen gekennzeichnet ist, löst die Aufgabe, ein Zuschaltventil zu schaffen welches im Normalbetrieb ohne den Betrieb zu beeinflussen auf Gängigkeit geprüft werden kann, und ein hydraulisches Sicherheits- und Kraftölsystem anzugeben, in welchem dieses erfindungsgemässe Zuschaltventil vorteilhaft eingesetzt werden kann.

Die durch die Erfindung erreichten Vorteile sind im wesentlichen darin zu sehen, dass die Betriebssicherheit der Gesamtanlage wesentlich erhöht wird. Zudem ist es vorteilhaft, dass die wichtigsten Elemente des Systems, ohne den Normalbetrieb der Gesamtanlage zu unterbrechen oder störend zu beeinflussen, auf ihre Funktionsfähigkeit untersucht werden können, was die Verfügbarkeit der Gesamtanlage deutlich erhöht.

Weiterhin wirkt es sich als vorteilhaft aus, dass die Erfindung ein vergleichsweise einfaches Zweirohrsystem ermöglicht, bei welchem die Impulse des Sicherheitssystems durch das Rohrleitungssystem für die Kraftölversorgung zu den Stellantrieben der Ventile übertragen werden. Ein eigenes Rohrleitungssystem für das Sicherheitssystem wird deshalb nicht benötigt, was erhebliche wirtschaftliche Vorteile mit sich bringt. Zudem wird die Anzahl von Rohren und deren Verschraubungsstellen erheblich reduziert, was zur Folge hat, dass die Gefahr von undichten Stellen und damit auch die Brandgefahr wesentlich reduziert wird.

Die weiteren Ausgestaltungen der Erfindung sind Gegenstände der abhängigen Ansprüche.

Die Erfindung, ihre Weiterbildung und die damit erzielbaren Vorteile werden nachstehend anhand der Zeichnung, welche lediglich einen möglichen Ausführungsweg darstellt, näher erläutert.

### Kurze Beschreibung der Zeichnung

Es zeigen:
Fig. 1 bis Fig. 4 eine erste Ausführungsform der Erfindung in verschiedenen Betriebszuständen,
Fig. 5 bis Fig.8 eine zweite Ausführungsform der Erfindung in verschiedenen Betriebszuständen und
Fig. 9 eine dritte Ausführungsform der Erfindung.

Bei allen Figuren sind gleich wirkende Elemente mit gleichen Bezugszeichen versehen.

### Wege zur Ausführung der Erfindung

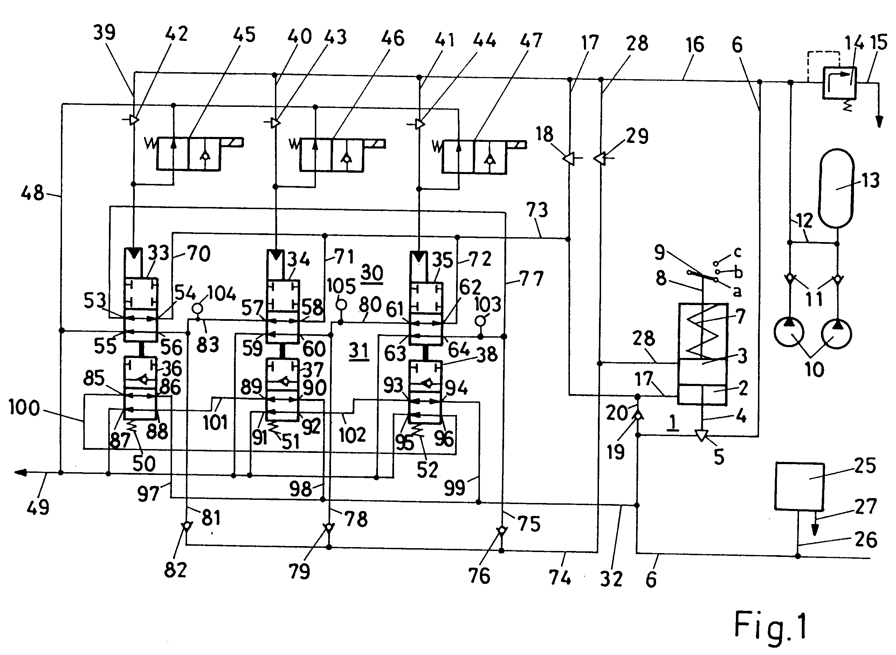

Die Fig. 1 zeigt in schematischer Darstellung ein Zuschaltventil 1 in einem hydraulischen Sicherheits- und Kraftölsystem für die Dampfzuführung einer nicht dargestellten Turbine. In der gezeigten Stellung ist ein Antriebsvolumen 2 nicht mit Druck beaufschlagt und ein Kolben 3 ist in seiner unteren Endlage. Der Kolben 3 ist über eine Ventilspindel 4 mit einer Dichtungsstelle 5 verbunden. Die Dichtungsstelle 5 ist in der Regel als Teil eines Schieberventils anzusehen, dessen Dichtkante eine Leitung 6 in dieser unteren Endlage vollständig abgesperrt. Hier könnte die Dichtungsstelle 5 auch als Sitzventil ausgebildet sein. Auf der anderen Seite des Kolbens 3 greift eine Feder 7 an, die denselben in die untere Endlage drückt. Der Kolben 3 ist über eine Stange 8 mit einem schematisch angedeuteten Stellungsanzeiger 9 verbunden, der drei Stellungen a,b,c elektrisch anzeigen und weitermelden kann. Die Anzeige Stellung a entspricht der unteren Endlage des Kolbens 2, also der geschlossenen Stellung des Zuschaltventils 1. Der Stellungsanzeiger wird vorteilhaft als berührungsloser Endschalter ausgebildet.

In diesem System wird als Druckfluid beispielsweise Oel verwendet. Das Oel sammelt sich in einem Ablauf bekannter Ausgestaltung und wird von dort mittels druckgeregelter Pumpen 10 über jeweils ein Rückschlagventil 11 in eine Leitung 12 unter Druck eingespeist. Ein Druckspeicher 13 wirkt ebenfalls auf die Leitung 12 ein. Es sind auch andere Mittel zur Druckerzeugung und Druckhaltung möglich. In der Leitung 12 entstehender Überdruck und Druckspitzen werden über ein Überdruckventil 14 und durch eine Leitung 15 in einem Ablauf hinein, wie durch einen Pfeil angedeutet, abgebaut. Die Leitung 12 mündet in eine Leitung 16 ein, von der die Leitung 6 abzweigt. Ferner zweigt von der Leitung 16 eine Leitung 17 ab, die mit einer Blende 18 versehen ist und die unten in das Antriebsvolumen 2 einmündet. Die Leitung 17 ist über ein mit einem Rückschlagventil 19 versehenen Leitungsstück 20 mit einer Leitung 6 verbunden. Das Rückschlagventil 19 erlaubt einen Oelstrom von der Leitung 17 in die Leitung 6. Die Leitung 6 führt weiter zu einer Vielzahl von hydraulisch betätigten Ventilen, welche die Dampfzuführung der Turbine regeln. Hier ist lediglich ein Ventil 25 dargestellt, welches über eine Stichleitung 26 von der Leitung 6 mit Oel beaufschlagt wird. Eine mit einem Pfeil versehene Leitung 27 deutet den Rückfluss des Oels aus dem Ventil 25 in den Ablauf an.

Von der Leitung 16 zweigt eine weitere Leitung 28 ab, die über eine Blende 29 mit dem Antriebsvolumen 2 verbunden ist. Die Leitung 28 mündet in axialer Richtung versetzt oberhalb der Leitung 17 in das Antriebsvolumen 2 ein. In der gezeichneten Stellung des Zuschaltventil 1 wird die Einmündung der Leitung 28 durch den Kolben 3 verschlossen.

Eine erste dreikanalige hydraulische 2 von 3-Schaltung 30 ist für die Steuerung der Bewegungen des Zuschaltventils 1 vorgesehen. Eine zweite dreikanalige hydraulische 2 von 3-Schaltung 31 überwacht den Druck in der Leitung 6, sie steht über eine Leitung 32 mit der Leitung 6 in Wirkverbindung. Die erste 2 von 3-Schaltung 30 weist pro Kanal ein Ventil 33,34,35 auf, die zweite 31 ebenfalls pro Kanal je ein Ventil 36,37,38. Die Ventile sind mechanisch pro Kanal zu einer hydraulisch zu betätigenden Einheit gekoppelt, das Ventil 33 mit dem Ventil 36, das Ventil 34 mit 37 und das Ventil 35 mit 38. Die hydraulische Betätigung erfolgt von der Leitung 16 her über je eine Stichleitung 39, 40,41 pro Kanal, wobei jede der Stichleitungen 39, 40, 41 mit je einer Blende 42, 43, 44 versehen ist. Die Absteuerung der hydraulischen Betätigung erfolgt mit Hilfe von je einem Magnetventil 45, 46, 47 pro Kanal. In Fig. 1 sind die Magnetventile 45, 46, 47 im entregten Zustand dargestellt, sie sind durch die symbolisch angedeuteten Federn in die gezeigte Stellung gedrückt worden, sodass die Stichleitungen 39, 40, 41 nach den Blenden 42, 43, 44 durch eine Leitung 48 in einen Ablauf 49 druckentlastet werden. Die Ventile der beiden 2 von 3-Schaltungen 30 und 31 wurden ebenfalls durch die symbolisch dargestellten Federn 50, 51 und 52 in die gezeigte Stellung gedrückt.

Das Ventil 33 weist vier Anschlüsse 53, 54, 55, 56 auf, das Ventil 34 weist vier Anschlüsse 57, 58, 59, 60 auf und das Ventil 35 weist vier Anschlüsse 61, 62, 63, 64 auf. Die Position der Anschlüsse ist der Fig. 1 zu entnehmen. Die Anschlüsse 54, 58 und 62 sind über je eine Stichleitung 70, 71, 72 mit einer Leitung 73 verbunden, die von der Leitung 17 abzweigt. Eine Leitung 74 zweigt von der Leitung 28 ab. Von der Leitung 74 zweigt eine Stichleitung 75 ab, die ein Rückschlagventil 76 aufweist, welches eine Oelströmung in die Stichleitung 75 hinein erlaubt. Die Stichleitung 75 mündet in eine Verbindungsleitung 77 zwischen dem Anschluss 64 des Ventils 35 und dem Anschluss 53 des Ventils 33 ein. Von der Leitung 74 zweigt eine zweite Stichleitung 78 ab, die ein Rückschlagventil 79 aufweist, welches eine Oelströmung in die Stichleitung 78 hinein erlaubt. Die Stichleitung 78 mündet in eine Verbindungsleitung 80 zwischen dem Anschluss 61 des Ventils 35 und dem Anschluss 60 des Ventils 34 ein. Von der Leitung 74 zweigt ein dritte Stichleitung 81 ab, die ein Rückschlagventil 82 aufweist, welches eine Oelströmung in die Stichleitung 81 hinein erlaubt. Die Stichleitung 81 mündet in eine Verbindungsleitung 83 zwischen dem Anschluss 57 des Ventils 34 und dem Anschluss 56 des Ventils 33 ein. Der Anschluss 55 des Ventils 33, der Anschluss 59 des Ventils 34 und der Anschluss 63 des Ventils 35 ist jeweils direkt mit dem Ablauf 49 verbunden.

Das Ventil 36 weist vier Anschlüsse 85, 86, 87, 88 auf, das Ventil 37 weist vier Anschlüsse 89, 90, 91, 92 auf und das Ventil 38 weist vier Anschlüsse 93, 94, 95, 96 auf. Die Position der Anschlüsse ist der Fig. 1 zu entnehmen. Die Anschlüsse 86, 90 und 94 sind über je eine Stichleitung 97, 98, 99 und 94 mit der Leitung 32 und über diese mit der Leitung 6 verbunden. Der Anschluss 85 des Ventils 36 ist über eine Verbindungsleitung 100 mit dem Anschluss 96 des Ventils 38 verbunden. Der Anschluss 88 des Ventils 36 ist über eine Verbindungsleitung 101 mit dem Anschluss 89 des Ventils 37 verbunden. Der Anschluss 92 des Ventils 37 ist über eine Verbindungsleitung 102 mit dem Anschluss 93 des Ventils 38 verbunden. Der Anschluss 87 des Ventils 36, der Anschluss 91 des Ventils 37 und der Anschluss 95 des Ventils 38 ist jeweils direkt mit dem Ablauf 49 verbunden.

Die Verbindungsleitungen 77, 80 und 83 können mit jeweils einem Druckwächter 103, 104, 105 versehen sein, welcher den jeweiligen Druck in den Verbindungsleitungen misst. Jeder dieser Druckwächter kann beispielsweise ein piezoelektrisches Messglied enthalten, welches ohne mechanische Kontaktgabe und deshalb praktisch wartungsfrei arbeitet. Jeder der Druckwächter 103, 104, 105 spricht bei Unterschreitung eines eingestellten Mindestdruckwertes an und gibt ein elektrisches Signal an eine nicht dargestellte, übergeordnete Anlagenleittechnik ab, wo dieses Signal weiterverarbeitet wird.

In Fig. 1 sind die erste 30 und die zweite 2 von 3-Schaltung 31 im abgesteuerten Zustand, also ohne Oeldruckbeaufschlagung dargestellt, sodass durch die Federn 50, 51, 52 die Ventile 33 bis 38 in die jeweils skizzenhaft dargestellte untere Schaltposition gedrückt werden. Beim Ventil 33 sind dann die Anschlüsse 53 und 54 durchverbunden, sodass nach beiden Richtungen Oel fliessen kann, ferner sind auch die Anschlüsse 55 und 56 so verbunden, dass beim Anschluss 55 Oel ausfliessen kann. Die übrigen Ventile 24 bis 38 sind entsprechend geschaltet.

In der zweiten Schaltposition der Ventile 33, 34 und 35 werden die jeweiligen paarweise einander gegenüberstehenden Anschlüsse voneinander getrennt und es kann in dieser Position keine Oel durch das jeweilige Ventil fliessen. Die Ventile 36, 37 und 38 sperren in ihrer zweiten Schaltposition ebenfalls den Oeldurchfluss ab. Die jeweils unteren Anschlüsse sind durch einen als Sitzventil ausgebildeten Ventilsitz getrennt, welcher ein Aussfliessen des Oeles aus dem jeweiligen Ventil heraus in Richtung Ablauf 49 blockiert. Diese Ausführung wirkt sich im Hinblick auf die Betriebssicherheit vorteilhaft aus.

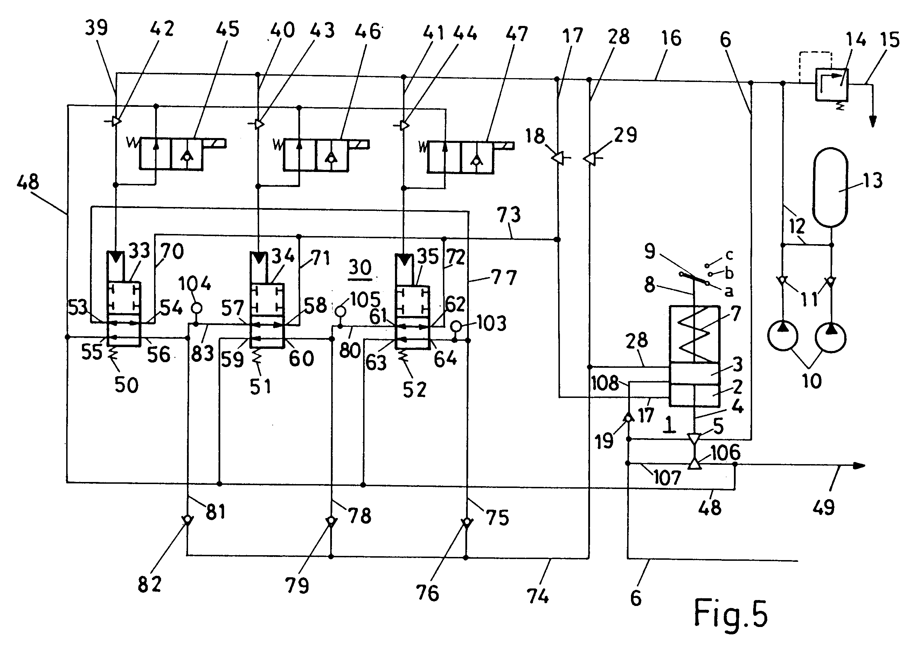

Eine weitere, etwas vereinfachte Ausgestaltung der Erfindung ist der Fig. 5 zu entnehmen. Gegenüber der Fig. 1 unterscheidet sich diese Ausgestaltung dadurch, dass sie nur eine 2 von 3-Schaltung 30 aufweist, und dass das Zuschaltventil 1 neben der Dichtungsstelle 5 eine weitere Dichtungsstelle 106 aufweist. Diese Dichtungsstelle 106 gibt in der gezeichneten Lage des Zuschaltventils 1 eine Leitung 107 frei, die von der Leitung 6 abzweigt, sodass Oel aus der Leitung 6 in den Ablauf 49 strömen kann. Zwischen den Leitungen 17 und 28 mündet in axialer Richtung versetzt eine weitere Leitung 108 in das Antriebsvolumen 2 ein. Diese Leitung 108 mündet über ein Rückschlagventil 19 in die Leitung 6, wobei das Rückschlagventil 19 einen Oelstrom aus dem Antriebsvolumen 2 heraus erlaubt, sobald der Antriebskolben 3 den Querschnitt der Leitung 108 freigibt.

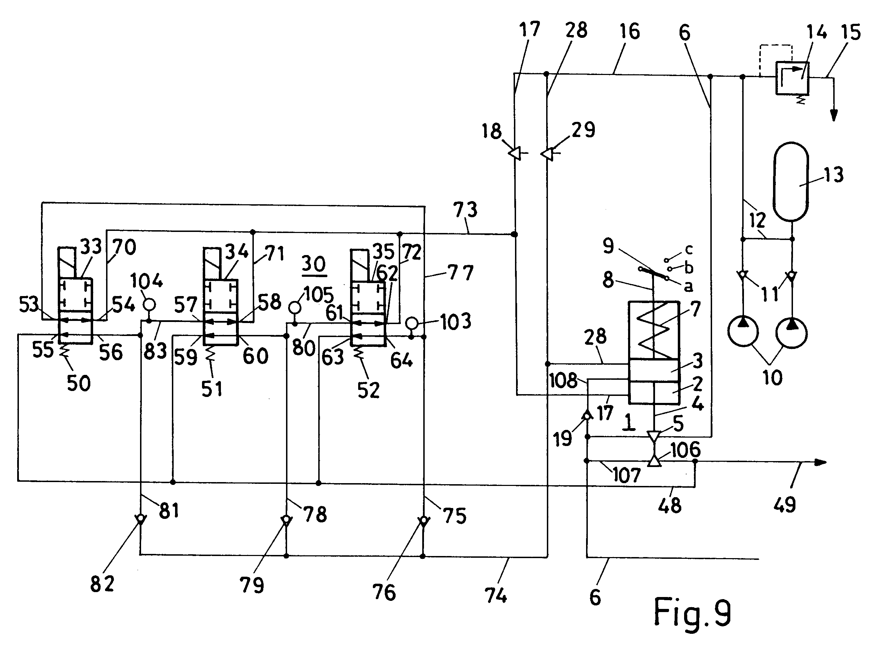

Der Fig. 9 ist eine weitere, gegenüber der Ausführung nach Fig. 5 vereinfachte Ausgestaltung der Erfindung zu entnehmen. Gegenüber der Fig. 5 unterscheidet sich diese Ausgestaltung dadurch, dass die 2 von 3-Schaltung elektromagnetisch betätigt wird. Jedes der Ventile 33, 34 und 35 ist, wie in der Figur angedeutet, mit einem separatem Auslösemagneten versehen. Von einer übergeordneten Anlagenleittechnik können diese Auslösemagnete elektrisch angeregt werden. Die Auslösemagnete betätigen die als Schieberventile ausgelegten Ventile 33, 34 und 35 gegen die Kraft der Federn 50, 51 und 52.

Zur Erläuterung der Wirkungsweise sei zunächst die Fig. 1 näher betrachtet. Die Anordnung ist vollständig abgesteuert. Der Oeldruck aus den Stichleitungen 39, 40 und 41 ist über die Magnetventile 45, 46, 47 und durch die Leitung 48 in den Ablauf 49 hinein abgebaut worden, sodass die Ventile der beiden 2 von 3-Schaltungen 30, 31 durch die Federn 50, 51, 52 in die gezeichnete Stellung gedrückt werden. Das Antriebsvolumen 2 wird durch die Leitungen 17 und 73, die Stichleitung 70, durch das Ventil 33 in die Verbindungsleitung 77 und durch das Ventil 35 in den Ablauf 49 druckentlastet, wobei parallel zum letztgenannten Weg über die Stichleitungen 71 bzw. 70 und die Verbindungsleitungen 83 bzw. 80 ebenfalls eine Druckentlastung in der Ablauf 49 erfolgt. Die Dichtungsstelle 5 ist geschlossen, sodass keine grösseren Mengen Oel unter Druck eingespeist werden können. Lediglich durch die Blenden 18 und 29 könnten kleinere Oelmengen eingespeist werden, die jedoch über die Leitungen 73 bzw. 74 in den Ablauf 49 abgeführt würden. Von der Leitung 74 führen die Stichleitungen 75, 78 und 81 in die Verbindungsleitungen 77, 80 und 83 und von dort weiter in den Ablauf 49.

Zudem wird das Antriebsvolumen 2 über die Leitung 17, das Leitungsstück 20, die Leitung 6 und die Leitung 32 druckentlastet. Die Leitung 6 wird vollständig über die Leitung 32 druckentlastet, sodass das Ventil 25 und weitere angeschlossene Ventile in Ruhestellung sind, d.h. die Dampfzuführung in die Turbine ist abgestellt. Von der Leitung 32 aus geht die Druckentlastung auf drei parallelen Wegen in den Ablauf 49, nämlich: erstens über die Stichleitung 97, durch das Ventil 36, die Verbindungsleitung 100 und durch das Ventil 38, zweitens über die Stichleitung 98, durch das Ventil 37, die Verbindungsleitung 101 und durch das Ventil 36 und drittens über die Stichleitung 99, durch das Ventil 38, die Verbindungsleitung 102 und durch das Ventil 37.

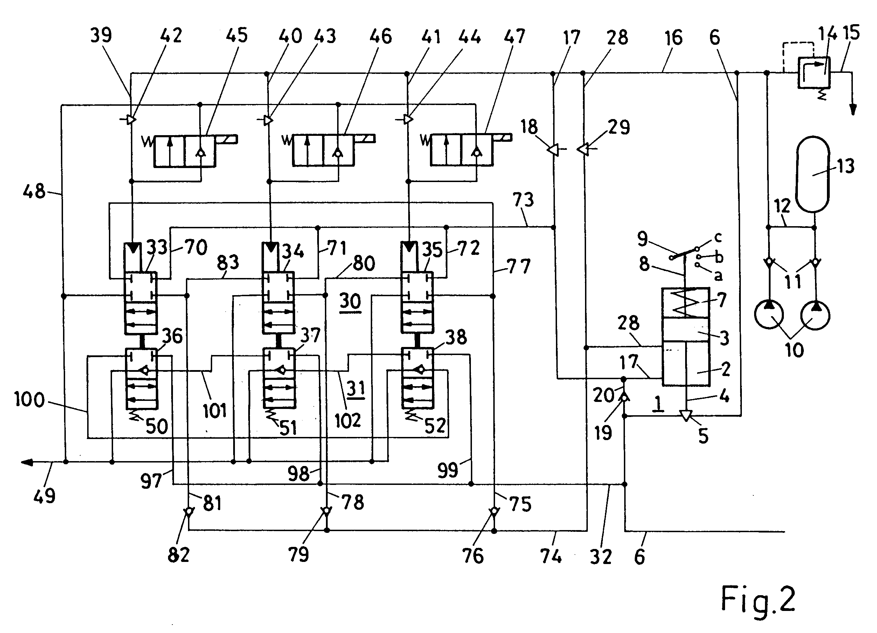

Fig. 2 zeigt die Anordnung von Fig. 1 in vollem Betrieb. Der Übergang von dem einen Betriebszustand in den anderen soll nachstehend beschrieben werden. Zuerst werden die Magnetventile 45, 46, 47 erregt, sodass sie die in Fig. 2 gezeigte Stellung einnehmen. Die Leitung 16 wird jetzt nicht mehr über einen vergleichsweise grossen Querschnitt druckentlastet, sodass sich in ihr, durch die Pumpen 10 erzeugter Oeldruck aufbauen kann. Der Oeldruck wirkt über die Stichleitungen 39, 40, 41 auf die 2 von 3-Schaltungen 30, 31 ein und bewegt deren Ventile 33 bis 38 in die in Fig. 2 gezeigte Stellung, sodass auch durch diese Ventile kein Oel mehr in den Ablauf 49 gelangen kann. Durch die Leitung 17 strömt Oel, dessen Menge durch die Blende 18 begrenzt wird, ein. Das Zuschaltventil bleibt zunächst in der in Fig. 1 gezeigten Position, da kein Druckaufbau im Antriebsvolumen 2 möglich ist ehe die Leitung 6 und das durch sie gespeiste Leitungssystem nicht gefüllt ist. Durch das Leitungsstück 20 strömt zunächst Oel in die Leitung 6 ein und füllt diese Leitung 6 und das mit ihr verbundene Leitungssystem auf. Der Auffüllvorgang wird, wie bereits ausgeführt, durch die Blende 18 bestimmt. Etwa in der Leitung 6 vorhandene Luft wird durch Entlüftungen und stets vorhandene Undichtigkeiten aus dem System herausgedrückt. Sobald das System und natürlich auch über die Leitungen 73 und 74 die Leitungen im Bereich der beiden 2 von 3-Schaltungen 30, 31 aufgefüllt sind, steigt der Oeldruck an insbesondere auch im Antriebsvolumen 2. Sobald ein bestimmter Wert, beispielsweise 5 bar, überschritten wird öffnet das Zuschaltventil 1, die Dichtungsstelle 5 gibt den vollen Querschnitt der Leitung 6 frei und die Oelnachspeisung bis zum vollen Betriebsdruck erfolgt durch die Leitung 6. Das Umschalten von der Einspeisung durch die Leitung 17 auf die Leitung 6 erfolgt ohne nennenswerte Druckstösse, was die Lebensdauer der Anordnung vorteilhaft verlängert.

Der Kolben 3 des Zuschaltventils 1 wird nun gegen die Kraft der Feder 7 nach oben gedrückt, bis er die Leitung 28 freigibt, durch die nun, parallel zur Leitung 17, solange zusätzlich Oel unter Druck in das Antriebsvolumen 2 eingespeist wird, bis die in Fig. 2 angedeutete Endstellung erreicht wird. Der Stellungsanzeiger 9 zeigt jetzt die Stellung c an. Diese Stellung c wird beim normalen Betriebszustand des hydraulischen Sicherheits- und Kraftölsystems eingenommen.

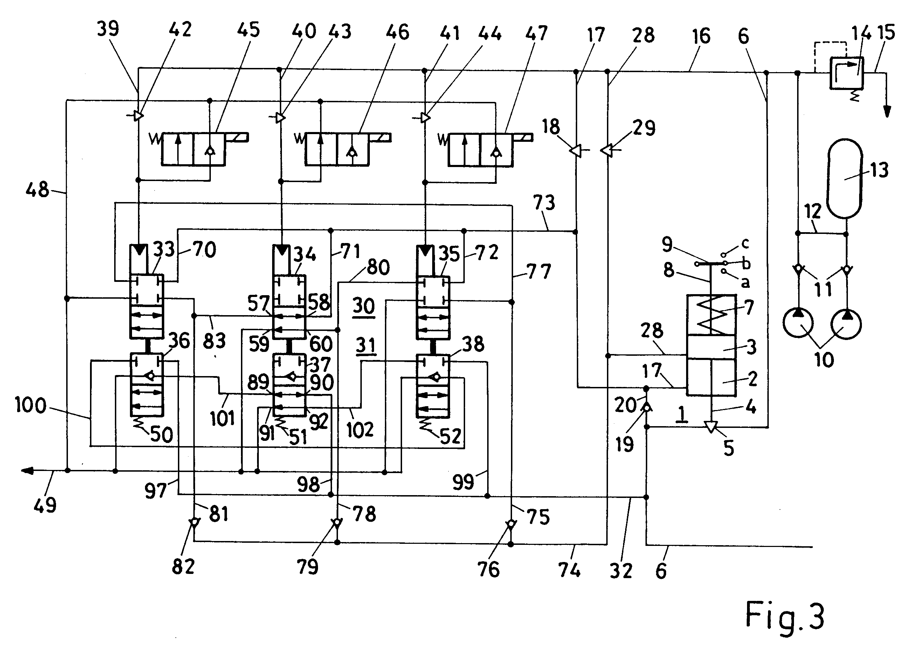

Der normale Betriebszustand dauert in der Regel vergleichsweise recht lange an, sodass es in Anbetracht der Wichtigkeit des Zuschaltventils 1 für das ganze System, wünschenswert erscheint, dasselbe ab und zu auf Gängigkeit zu prüfen. Ein nicht erkannter Ausfall dieses Zuschaltventils 1 könnte schwere Folgeschäden in der Anlage verursachen, falls es im Störungsfall nicht einwandfrei arbeiten würde. Eine Gängigkeitsprüfung wird beispielsweise, wie in Fig. 3 gezeigt, durch das Absteuern des Magnetventils 48 eingeleitet. Dieses Absteuern hat zur Folge, dass ein Kanal der beiden 2 von 3-Schaltungen 30, 31 mit den Ventilen 34 und 37 nicht mehr über die Leitung 40 druckbeaufschlagt wird, sodass die Ventile 34 und 37 durch die Kraft der Feder 51 in die gezeigte Schaltstellung gedrückt werden. Die Betätigung des Ventils 37 hat keine Auswirkungen auf den Druck in der Leitung 6, da die beiden benachbarten Ventile 36 und 38 nach wie vor einen Druckabfall in der Leitung 6 verhindern. Durch das Ventil 34 dagegen wird Oel aus dem Antriebsvolumen 2 in den Ablauf 49 geleitet und zwar auf dem Weg durch die Leitungen 28, 74, 78 in die Verbindungsleitung 80 und von dort zum Anschluss 60 und durch das Ventil 34 hindurch zum Anschluss 59, der direkt mit dem Ablauf 49 verbunden ist. Dieses Ableiten des Oeles erfolgt solange, bis der Kolben 3 die Einmündung der Leitung 28 in das Antriebsvolumen 2 vollständig abschliesst. Der Stellungsanzeiger 9 zeigt dann die Stellung b an. Die Bewegung in Schliessrichtung, die der Kolben 3 durchgeführt hat, hat noch keine Auswirkungen auf den durch die Dichtungsstelle 5 freigegebenen Ventilquerschnitt, sodass während dieser Gängigkeitsprüfung des Kolbens 3 die Drucknachspeisung durch die Leitung 6 nicht gedrosselt wird. Die Anlage merkt also nichts von dieser Prüfung. Nach dem erneuten Erregen des Magnetventils 46 schliesst dieses die Druckentlastung der Leitung 40 wieder ab und der dort entstehende Druck schliesst wieder die Ventile 34 und 37. Das durch die Leitung 17 und später gleichzeitig durch die Leitung 28 einströmende Oel unter Druck drückt danach den Kolben 3 wieder in die Endstellung c.

Die Anzeige der Stellung b durch den Stellungsanzeiger 9 wird durch die übergeordnete Anlagenleittechnik registriert und ausgewertet. Die Funktionsfähigkeit des Zuschaltventils 1 ist damit bestätigt und gleichzeitig auch die Funktionsfähigkeit des mittleren Kanals der beiden 2 von 3-Schaltungen 30, 31. In der Regel werden alle drei Kanäle der Reihe nach durchgeprüft, wodurch ein vergleichsweise grosses Mass an Sicherheit und Verfügbarkeit der Anlage sichergestellt werden kann. Sollte ein Kanal der 2 von 3-Schaltungen 30, 31 einmal gestört sein, so kann die Anzeige der Stellung b, die ja zwangsläufig danach erfolgt, auch als Warnsignal an die Anlagenleittechnik betrachtet werden.

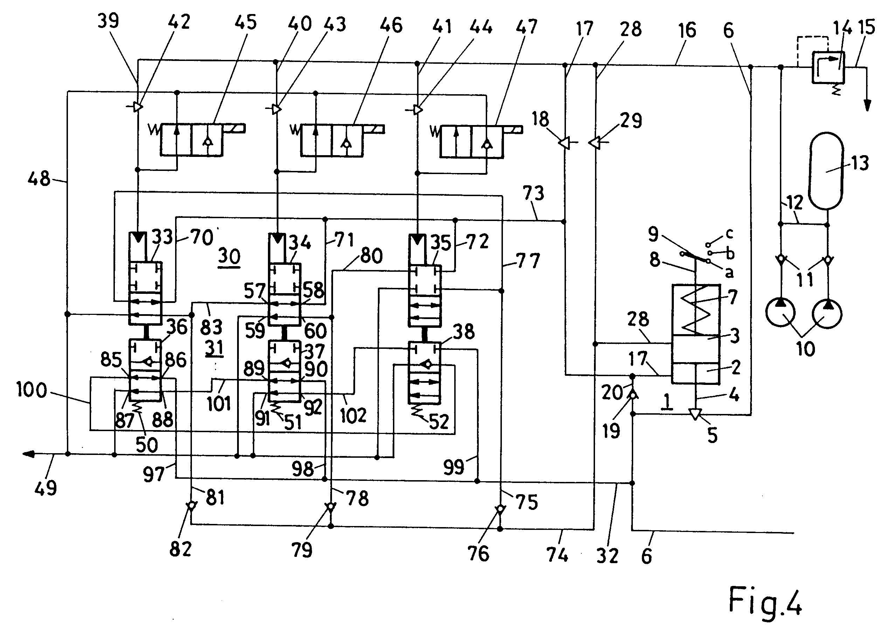

Bei einer Abschaltung im Falle einer Störung, muss mit grosser Sicherheit die Oelnachspeisung durch die Leitung 6 unterbrochen werden. Die Dampfzuführung zur Turbine muss in diesem Fall sicher unterbrochen werden, d.h. die Ventile, die durch die Leitung 6 beaufschlagt werden, müssen schliessen. Ein derartiger Schliessvorgang wird durch eine Unterbrechung der Leitung 6 durch das Zuschaltventil 1 eingeleitet und der Druck in der Leitung 6 wird ausschliesslich über die entsprechend, beispielsweise wie in Fig. 1, geschaltete zweite 2 von 3-Schaltung 31 in den Ablauf 49 entlastet, sodass die zunächst durch diesen Druck in offener Stellung gehalten Ventile abgesteuert werden und schliessen können. Es genügt jedoch auch, wenn für das Einleiten eines gewollten Schliessvorganges lediglich zwei Kanäle der 2 von 3-Schaltungen 30 und 31, wie in Fig. 4 dargestellt, abgesteuert werden. Durch die Ventile 36 und 37 wird die Leitung 6 und das durch diese versorgte Leitungssystem druckentlastet. Durch die Leitungen 28 und 74 wird zunächst, parallel zu der durch die Leitung 17 erfolgenden Druckentlastung, das Antriebsvolumen 2 über die Ventile 33 und 34 druckentlastet, und zwar solange bis der Kolben 3 die Leitung 28 abschliesst. Die Schliessbewegung des Zuschaltventils 1 wird dadurch vorteilhaft beschleunigt und die zeitliche Dauer des Schliessvorgangs wird abgekürzt.

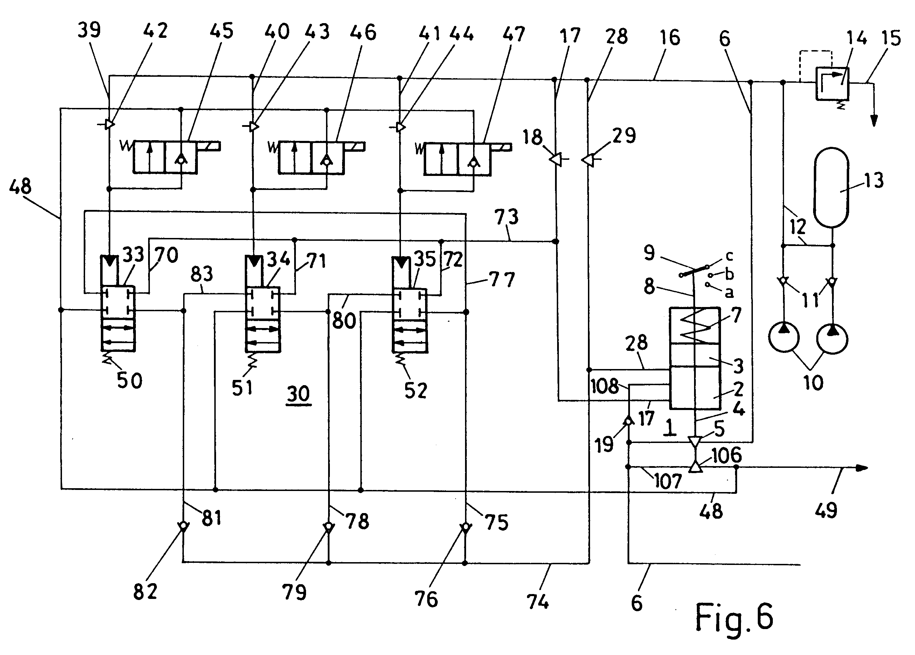

Die 2 von 3-Schaltung 30 in Fig. 5 arbeitet ebenso wie die entsprechende Schaltung in Fig. 1 und braucht hier nicht weiter beschrieben zu werden. In Fig. 5 ist der völlig abgesteuerte Zustand der Anlage dargestellt. Soll die Anlage hochgefahren werden, so strömt durch die Leitung 17 begrenzt durch die Blende 18 Oel unter Druck ein, dabei sind jedoch die Magnetventile 45, 46 und 47 erregt, wie in Fig. 6 dargestellt, mit den entsprechenden Wirkungen auf die 2 von 3-Schaltung 30. Das Oel strömt in das Antriebsvolumen 2 des Zuschaltventils 1 ein und baut dort einen Druck auf, der zunächst nicht entweichen kann. Sobald der Druck so gross ist, dass er die Kraft der Feder 7 überwindet, bewegt sich das Zuschaltventil 1 nach oben, aber nur solange, bis der Kolben 3 die Leitung 108 freigibt. In dieser Position hat die Dichtungsstelle 106 bereits die Leitung 107 gegenüber dem Ablauf 49 abgeschlossen. Durch die freigegebene Leitung 108 strömt jetzt Oel aus dem Antriebsvolumen 2 weiter durch das Rückschlagventil 19 in die Leitung 6 und füllt diese und das ihr angeschlossene Leitungssystem auf. Erst wenn dieses System gefüllt und wenn ein Druck von beispielsweise 5 bar erreicht ist, bewegt sich der Kolben 3 weiter nach oben und die Dichtungsstelle 5 gibt den vollen Querschnitt der Leitung 6 für die Nachspeisung von Oel unter Druck frei. Der Kolben 3 bewegt sich weiter nach oben und gibt dann den Querschnitt der Leitung 28 frei, ehe er in die Endstellung c gelangt, wie sie in Fig. 6 dargestellt ist.

Während dieses Vorgangs bleibt die Dichtungsstelle 106 stets geschlossen.

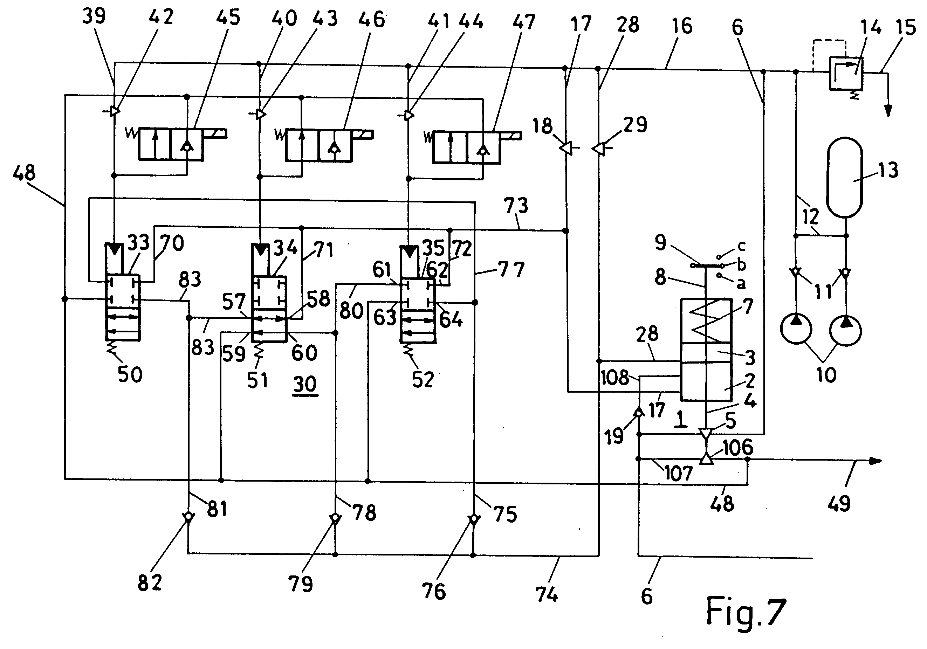

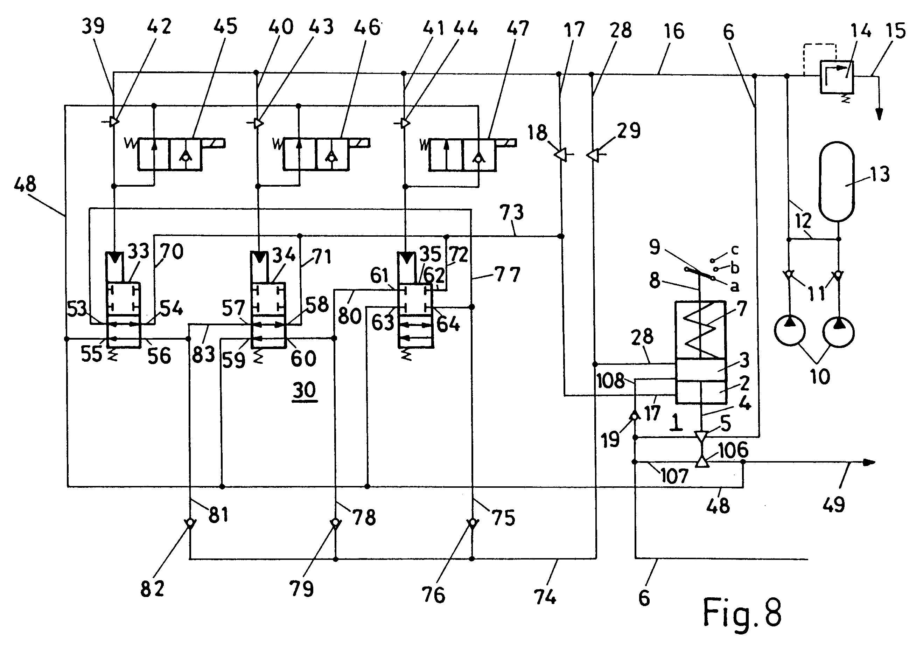

Auch bei dieser Ausgestaltung der Erfindung ist, wie in Fig. 7 dargestellt, eine Gängigkeitsprüfung des Zuschaltventils 1 möglich, wenn das Magnetventil 46 oder eines der anderen beiden Magnetventile 45 und 47 abgesteuert wird. Der Vorgang ist im Zusammenhang mit Fig. 3 bereits sinngemäss beschrieben worden und wird hier nicht nochmals erläutert. Auch eine gewollte Normalabschaltung ist in Fig. 8 der Vollständigkeit halber auch mit dieser Ausgestaltung der Erfindung dargestellt, sie braucht jedoch, wegen der prinzipiellen Aehnlichkeit mit Fig. 4, hier nicht ausführlich erläutert werden. Das Zuschaltventil 1 ist hier so ausgelegt, dass stets eine der beiden Dichtungsstellen 5, 106 offen ist, während die andere geschlossen ist. Insbesondere gibt die die Dichtungsstelle 106 nur dann die Leitung 107 frei, wenn die Dichtungsstelle 5 geschlossen ist. Die gesamte Druckentlastung der Leitung 6 samt angeschlossenem Leitungssystem erfolgt hier über die Leitung 107 in den Ablauf 49, wenn eine Absteuerung des Systems erfolgt.

Die 2 von 3-Schaltung in Fig. 9 arbeitet ebenso wie die entsprechende Schaltung in Fig. 1, nur die hydraulische Betätigung der Ventile 33, 34 und 35 ist durch eine elektromagnetische Betätigung ersetzt worden. In der Fig. 9 ist der völlig abgesteuerte Zustand der Anlage dargestellt, ähnlich wie in Fig. 5. Die übrigen Betriebszustände und auch die Übergänge zwischen den einzelnen Betriebszuständen können entsprechend den Fig. 5 bis 8 und der diesen Figuren zugeordneten Beschreibung entnommen werden, sodass sich eine weitere Erläuterung hier erübrigt.

Die Ventile 33, 34 und 35 sind als Schieberventile ausgelegt, obwohl bekannt ist, dass Schieberventile, wenn sie längere Zeit nicht betätigt werden, zum Festsitzen neigen. Da nun, wie bereits ausgeführt, mit der erfindungsgemässen Anordnung Funktionskontrollen möglich sind, ohne dass der Druck in der Leitung 6 und damit das Betriebsverhalten der zugehörigen Turbine beeinflusst wird, ist der Einsatz von Schieberventilen hier möglich. Es werden so häufig Funktionskontrollen der Ventile 33, 34 und 35 durchgeführt, dass ein Festsitzen dieser Ventile nicht auftreten kann. Sollte ein Festsitzen trotzdem auftreten, so wird dies rechtzeitig und schnell erkannt und Abhilfe ist möglich.

Im Rahmen der Gängigkeitsprüfung des Zuschaltventils 1 lassen sich die erwähnten Funktionskontrollen jeweils mit durchführen. Eine zusätzliche Überwachung, die in der Lage ist eine beginnende Störung zu erkennen, ist ebenfalls möglich. Dabei wird durch die entsprechend ausgebildete Anlagenleittechnik die Zeit von der Befehlsgabe für eine elektromagnetische Auslösung eines der Ventile 33, 34 oder 35 bis zum Ansprechen des dem betreffenden Ventil zugeordneten Druckschalters 103, 104, 105 gemessen, zudem kann noch die Zeit bestimmt werden bis das Zuschaltventil 1 die Stellung b erreicht hat. Diese Zeitmessung bzw. die Zeitmessungen werden verglichen mit in der Anlagenleittechnik gespeicherten Solldaten, sodass jederzeit aus einem Abweichen von den Solldaten auf die jeweilige Ursache geschlossen werden kann. In der Regel werden schon kleine Abweichungen erkannt, sodass Abhilfemassnahmen bereits eingeleitet werden können ehe sich eine ernste Störung entwickeln kann. Diese Funktionskontrollen werden periodisch vorgenommen und in der Regel vollautomatisch durch die Anlagenleittechnik durchgeführt und ausgewertet, daneben besteht aber durchaus die Möglichkeit bei Bedarf manuell einzugreifen und diese Funktionskontrollen unabhängig von der Anlagenleittechnik durchzuführen. Der vollautomatische und der manuell eingeleitete Ablauf der Funktionskontrolle sind aber gegenseitig verriegelt, um stets definierte Betriebszustände zu erhalten. Zudem wird die automatische Funktionskontrolle auch unterbunden, wenn bereits ein Defekt in der Anlage vorliegt und dieser noch nicht behoben wurde.

## Patentansprüche

1. Zuschaltventil (1) mit mindestens einer Dichtungsstelle (5, 106), die über eine Kolben-Zylinder-Anordnung betätigbar ist, welche Kolben-Zylinder-Anordnung ein durch ein Druckfluid beaufschlagtes und einerseits durch einen Kolben (3) begrenztes zylindrisches Antriebsvolumen (2) aufweist, mit Mitteln, welche den Kolben (3) entgegengesetzt zu einem sich im Antriebsvolumen (2) aufbauenden Druck mit Kraft beaufschlagen, dadurch gekennzeichnet,
- dass das Antriebsvolumen (2) durch mindestens zwei in axialer Richtung versetzte Leitungen (17,28) mit dem Druckfluid beaufschlagbar ist, wobei beim Beginn einer Druckbeaufschlagung des Antriebsvolumens (2) zunächst nur eine erste (17) der mindestens zwei Leitungen (17,28) ein Einströmen des Druckfluids ermöglicht.

2. Zuschaltventil nach Anspruch 1 mit einer Dichtungsstelle (5) gekennzeichnet,
- dass, bei weiterer Druckbeaufschlagung des Antriebsvolumens (2) erst nachdem die eine Dichtungsstelle (5) den vollen Zuströmquerschnitt des Zuschaltventils (1) freigegeben hat, der Querschnitt der zweiten Leitung (28) durch eine Dichtkante des Kolbens (3) freigegeben wird, und
- dass durch die zweite Leitung (28) austretendes Druckfluid einen Teilhub des Kolbens (3) in Schliessrichtung auslöst, welcher durch die Dichtkante des Kolbens (3) selbst beim Schliessen der zweiten Leitung (28) abgesteuert wird.

3. Zuschaltventil nach Anspruch 1 mit zwei Dichtungsstellen (5, 106) dadurch gekennzeichnet,
- dass bei weiterer Druckbeaufschlagung des Antriebsvolumens (2) zuerst eine erste Dichtungsstelle (106) eine Leitung (107) in einen Ablauf (49) für das Druckfluid schliesst,
- dass danach, nachdem eine zweite Dichtungsstelle (5) den vollen Zuströmquerschnitt des Zuschaltventils (1) freigegeben hat, der Querschnitt der zweiten Leitung (28) durch eine Dichtkante des Kolbens freigegeben wird, und
- dass durch die zweite Leitung (28) austretendes Druckfluid einen Teilhub des Kolbens (3) in Schliessrichtung des zweiten Ventilsitzes (5) auslöst, welcher durch die Dichtkante des Kolbens (3) selbst beim Schliessen der zweiten Leitung (28) abgesteuert wird.

4. Zuschaltventil nach Anspruch 3, dadurch gekennzeichnet,
- dass zwischen den beiden in axialer Richtung versetzten Leitungen (17, 28) eine dritte Leitung (108) in das Antriebsvolumen (2) einmündet, und
- dass diese dritte Leitung (108) ein Ausströmen des Druckfluids ermöglicht, nachdem eine Dichtkante des Kolbens (3) deren Leitungsquerschnitt freigegeben hat.

5. Hydraulisches Sicherheits- und Kraftölsystem für die Dampfzuführung einer Turbine mit mindestens einem Ventil (25), mit einem Leitungssystem zur hydraulischen Betätigung des mindestens einen Ventils (25), mit einem Zuschaltventil (1), über welches im Normalbetrieb ein Druckfluid in das Leitungssystem eingespeist wird,
dadurch gekennzeichnet,
- dass das Zuschaltventil (1) nach einem der Ansprüche 1 bis 4 ausgebildet ist.

6. Hydraulisches Sicherheits- und Kraftölsystem nach Anspruch 5, dadurch gekennzeichnet,
- dass für die Ansteuerung der ersten (17) und der zweiten Leitung (28) eine erste mehrkanalige hydraulische 2 von 3-Schaltung (30) vorgesehen ist.

7. Hydraulisches Sicherheits- und Kraftölsystem nach Anspruch 6, dadurch gekennzeichnet,
- dass die Betätigung der hydraulischen 2 von 3-Schaltung (30) hydraulisch über je ein Magnetventil (45, 46, 47) pro Kanal erfolgt.

8. Hydraulisches Sicherheits- und Kraftölsystem nach Anspruch 6, dadurch gekennzeichnet,
- dass die Betätigung der hydraulischen 2 von 3-Schaltung (30) elektromagnetisch über je einen Elektromagneten pro Kanal erfolgt.

9. Hydraulisches Sicherheits- und Kraftölsystem nach Anspruch 6, dadurch gekennzeichnet,
- dass für die Überwachung des Drucks im Leitungssystem zusätzlich eine zweite mehrkanalige hydraulische 2 von 3-Schaltung (31) vorgesehen ist.

10. Hydraulisches Sicherheits- und Kraftölsystem nach Anspruch 9, dadurch gekennzeichnet,
- dass die erste (30) und die zweite 2 von 3-Schaltung (31) miteinander jeweils pro Kanal mechanisch gekoppelt sind, und
- dass die Betätigung hydraulisch über je ein Magnetventil (45, 46, 47) pro Kanal erfolgt.

11. Hydraulisches Sicherheits- und Kraftölsystem nach einem der Ansprüche 9 oder 10, dadurch gekennzeichnet,
- dass in der ersten hydraulischen 2 von 3-Schaltung (30) in Verbindungsleitungen (77, 80, 83) jeweils ein Druckschalter (103, 104, 105) für die Überwachung der Ventile (33, 34, 35) dieser Schaltung vorgesehen ist.

12. Hydraulisches Sicherheits- und Kraftölsystem nach einem der Ansprüche 5 bis 11, dadurch gekennzeichnet,
- dass die jeweilige Position des Zuschaltventils (1) mittels eines Sensors überwachbar ist.

## Claims

1. Connecting valve (1) having at least one sealing location (5, 106) which can be actuated by means of a piston/cylinder arrangement, which piston/cylinder arrangement has a cylindrical drive volume (2) subjected to a pressure fluid and bounded on one side by a piston (3), having means which subject the piston (3) to a force opposed to a pressure building up in the drive volume (2), characterized in that
- the drive volume (2) can be subjected to pressure fluid through at least two pipes (17, 28) offset in the axial direction, only one first (17) pipe of the at least two pipes (17, 28) permitting a flow of pressure fluid into the drive volume (2) when the latter starts to be subjected to pressure.

2. Connecting valve according to Claim 1 with a sealing location (5), characterized in that
- when the drive volume (2) is further subjected to pressure, it is only after one sealing location (5) has released the full inlet flow cross-section of the connecting valve (1) that the cross-section of the second pipe (28) is freed by a sealing edge of the piston (3), and
- a partial stroke of the piston (3) in the closing direction [lacuna] is initiated by pressure fluid emerging through the second pipe (28), which valve location (5) is deactivated by the sealing edge of the piston (3) even on closure of the second pipe (28).

3. Connecting valve according to Claim 1 with two sealing locations (5, 106), characterized in that
- on further subjection of the drive volume (2) to pressure, a first sealing location (106)
- initially closes a pipe (107) into a drain (49) for the pressure fluid,
- subsequently, after a second sealing location (5) has released the full inlet flow cross-section of the connecting valve (1), the cross-section of the second pipe (28) is released by a sealing edge of the piston, and
- a partial stroke of the piston (3) in the closing direction of the second valve location (5) is initiated by pressure fluid emerging through the second pipe (28), which valve location (5) is deactivated by the sealing edge of the piston (3) even on closure of the second pipe (28).

4. Connecting valve according to Claim 3, characterized in that
- a third pipe (108) enters the drive volume (2) offset in the axial direction between the two pipes (17, 28), and
- this third pipe (108) permits pressure fluid to flow out after a sealing edge of the piston (3) has freed its pipe cross-section.

5. Hydraulic oil safety and power system for the supply of steam to a turbine having at least one valve (25), having a pipework system for the hydraulic actuation of the at least one valve (25), having a connecting valve (1) via which, in normal operation, a pressure fluid is fed into the pipework system, characterized in that
- the connecting valve (1) is designed in accordance with one of the Claims 1 to 4.

6. Hydraulic oil safety and power system according to Claim 5, characterized in that
- a first multi-channel hydraulic two-from-three circuit (30) is provided for the control of the first pipe (17) and the second pipe (28).

7. Hydraulic oil safety and power system according to Claim 6, characterized in that
- the actuation of the hydraulic two-from-three circuit (30) takes place hydraulically by means of one solenoid valve (45, 46, 47) for each channel.

8. Hydraulic oil safety and power system according to Claim 6, characterized in that
- the actuation of the hydraulic two-from-three circuit (30) takes place electromagnetically by means of one electromagnet per channel.

9. Hydraulic oil safety and power system according to Claim 6, characterized in that
- a second multi-channel hydraulic two-from-three circuit (31) is additionally provided for the monitoring of the pressure in the pipework system.

10. Hydraulic oil safety and power system according to Claim 9, characterized in that
- the first two-from-three circuit (30) and the second two-from-three circuit (31) are mechanically connected together in each channel, and
- the actuation takes place hydraulically by means of one solenoid valve (45, 46, 47) per channel.

11. Hydraulic oil safety and power system according to one of the Claims 9 or 10, characterized in that
- in the first hydraulic two-from-three circuit (30), a pressure switch (103, 104, 105) is provided in each connecting pipe (77, 80, 83) for monitoring the valves (33, 34, 35) of this circuit.

12. Hydraulic oil safety and power system according to one of the Claims 5 to 11, characterized in that
- the particular position of the connecting valve (1) can be monitored by means of a sensor.

## Revendications

1. Soupape de mise en circuit (1) avec au moins un point d'étanchéité (5, 106), qui est actionnable à l'aide d'un arrangement piston-cylindre, lequel arrangement piston-cylindre présente un volume d'entraînement (2) cylindrique alimenté par un fluide sous pression et limité d'une part par un piston (3), avec des moyens, qui appliquent une force sur le piston (3) en direction opposée à une pression que s'établit dans le volume d'entraînement (2), caractérisé en ce que
- le volume d'entraînement (2) peut être alimenté avec le fluide sous pression par l'entremise au moins de deux conduites (17, 28) décalées en direction axiale, la première (17) des au moins deux conduites (17, 28) seulement rendant tout d'abord possible, au début d'une admission de pression du volume d'entraînement (2), une introduction du fluide sous pression.

2. Soupape de mise en circuit selon la revendication 1 avec un point d'étanchéité (5) caractérisé en ce
- que, lors d'une admission supplémentaire de pression du volume d'entraînement (2) seulement après que l'un des points d'étanchéité (5) ait libéré la section transversale d'admission complète de la soupape de mise en circuit (1), la section transversale de la deuxième conduite (28) est libérée par un rebord d'étanchéité du piston (3), et
- qu'un fluide sous pression sortant de la deuxième conduite (28) déclenche une course partielle du piston (3) dans la direction de fermeture, qui est contrôlée même lors de la fermeture de la seconde conduite (28) par le rebord d'étanchéité du piston (3).

3. Soupape de mise en circuit selon la revendication 1 avec deux points d'étanchéité (5, 106), caractérisé en ce
- que, lors d'une admission supplémentaire de pression du volume d'entraînement (2), un premier point d'étanchéité (106) ferme tout d'abord une conduite (107) dans un orifice de sortie (49) pour le fluide sous pression,
- qu'ensuite, après qu'un deuxième point d'étanchéité (5) ait libéré la section transversale d'admission complète de la soupape de mise en circuit (1), la section transversale de la deuxième conduite (28) est libérée par un rebord d'étanchéité du piston, et
- que le fluide sous pression sortant de la deuxième conduite (28) déclenche une course partielle du piston (3) dans la direction de fermeture du siège de soupape (5), qui est contrôlée même lors de la fermeture de la deuxième conduite (28) par le rebord d'étanchéité du piston (3).

4. Soupape de mise en circuit selon la revendication 3, caractérisé en ce
- qu'entre les deux conduites décalées en direction axiale (17, 28), une troisième conduite (108) débouche dans le volume d'entraînement (2), et
- que cette troisième conduite (108) rend possible une évacuation du fluide sous pression, après qu'un rebord d'étanchéité du piston (3) ait libéré sa section transversale de conduite.

5. Système hydraulique de sécurité et de contrôle à l'huile pour l'alimentation en vapeur d'une turbine avec au moins une soupape (25), avec un système de conduites pour l'actionnement hydraulique d'au moins une soupape (25), avec une soupape de mise en circuit (1), par laquelle en fonctionnement normal un fluide sous pression est introduit dans le système de conduites, caractérisé en ce
- que la soupape de mise en circuit (1) est réalisée selon l'une des revendications 1 à 4.

6. Système hydraulique de sécurité et de contrôle à l'huile selon la revendication 5, caractérisé en ce
- qu'il est prévu pour la commande de la première conduite (17) et de la deuxième conduite (28) un premier montage hydraulique multicanaux 2 sur 3 (30).

7. Système hydraulique de sécurité et de contrôle à l'huile selon la revendication 6, caractérisé en ce
- que l'actionnement du montage hydraulique 2 sur 3 (30) se fait hydrauliquement à l'aide à chaque fois d'une électrovanne (45, 46, 47) par canal.

8. Système hydraulique de sécurité et de contrôle à l'huile selon la revendication 6, caractérisé en ce
- l'actionnement du montage hydraulique 2 sur 3 (30) se fait électromagnétiquement à l'aide à chaque fois d'un électro-aimant par canal.

9. Système hydraulique de sécurité et de contrôle à l'huile selon la revendication 6, caractérisé en ce
- que, pour la surveillance de la pression dans le système de conduites, il est prévu un deuxième montage hydraulique multicanaux 2 sur 3 (31).

10. Système hydraulique de sécurité et de contrôle à l'huile selon la revendication 9, caractérisé en ce
- que le premier montage 2 sur 3 (30) et le deuxième montage 2 sur 3 (31) sont à chaque fois couplés l'un à l'autre mécaniquement par canal, et
- que l'actionnement se fait hydrauliquement à l'aide à chaque fois d'une électrovanne (45, 46, 47) par canal.

11. Système hydraulique de sécurité et de contrôle à l'huile selon l'une quelconque des revendications 9 ou 10, caractérisé en ce
- que, dans le premier montage hydraulique 2 sur 3 (30) dans les conduites de raccordement (77, 80, 83) il est chaque fois prévu un interrupteur à pression (103, 104, 105) pour la surveillance des soupapes (33, 34, 35) de ce montage.

12. Système hydraulique de sécurité et de contrôle à l'huile selon l'une quelconque des revendications 5 à 11, caractérisé en ce
- que la position respective de la soupape de mise en circuit (1) peut être surveillée à l'aide d'un détecteur.
